Europäisches Patentamt

European Patent Office

Office européen des brevets

(19)

(11) Veröffentlichungsnummer : **0 108 164**
**B1**

(12) # EUROPÄISCHE PATENTSCHRIFT

(45) Veröffentlichungstag der Patentschrift :
25.03.87

(21) Anmeldenummer : 82110304.1

(22) Anmeldetag : 09.11.82

(51) Int. Cl.⁴ : **G 01 G 19/02**

(54) **Verfahren zur Herstellung einer Brückenwaage und Wägezelleneinbaueinheit, insbesondere zur Verwendung bei der Durchführung des Verfahrens.**

(43) Veröffentlichungstag der Anmeldung :
16.05.84 Patentblatt 84/20

(45) Bekanntmachung des Hinweises auf die Patenterteilung : 25.03.87 Patentblatt 87/13

(84) Benannte Vertragsstaaten :
AT BE CH DE FR GB IT LI LU NL SE

(56) Entgegenhaltungen :
EP-A- 0 097 734
DE-A- 2 244 912
DE-C- 1 214 428
FR-A-    464 524
GB-A- 2 076 978
US-A- 2 838 299
US-A- 3 770 068

(73) Patentinhaber : CARL SCHENCK AG
Landwehrstrasse 55 Postfach 40 18
D-6100 Darmstadt (DE)

(72) Erfinder : Giesecke, Peter, Dr.
Talstrasse 2a
D-6104 Seeheim/Stettbach (DE)
Erfinder : Feith, Johann
Spitzwegstrasse 11
D-6074 Rödermark (DE)

(74) Vertreter : Brand, Fritz, Dipl.-Ing.
Carl Schenck AG Patentabteilung Landwehrstrasse
55 Postfach 4018
D-6100 Darmstadt (DE)

EP 0 108 164 B1

## Beschreibung

Die Erfindung betrifft ein Verfahren zur Herstellung einer Brückenwaage, bei dem die Wägebrücke in Stahlbeton ausgeführt und in einer vorher erstellten Fundamentgrube für die Waage hergestellt wird, wobei die Anschlußelemente für die Wägezelle in die Brücke eingegossen werden, sowie eine Wägezelleneinbaueinheit, insbesondere zur Verwendung bei der Durchführung des Verfahrens.

Bei einer bekannten Brückenwaage ist die Wägebrücke aus vorgefertigten Spannbetonteilen hergestellt (DE-OS 22 44 912). Die Wägebrücke ist von Öffnungen durchsetzt, durch die die Wägezellen, auf welche die Brücke abgestützt wird, von oben zugänglich sind. Die Wägezelle weist dabei ein Abstützelement auf, das mit einer Fundamentplatte verbindbar ist. Eine solche Brückenausführung eignet sich vorwiegend für die Serienfertigung der Brücken- bzw. Plattformelemente in einer Fabrik.

Bei einer weiteren bekannten Brückenwaage in Stahlkonstruktion (DE-PS 12 14 428) wird bei der Montage der Waage zuerst die Wägebrücke in die vorbereitete Fundamentgrube eingelassen. Danach werden die Wägezellen von oben zwischen Rahmenträgern in der Brücke auf das Fundament aufgesetzt und anschließend die Brücke über Zwischenstücke und Auflager mit Hilfe von Druckschrauben angehoben und auf die Wägezellen abgestützt. Brückenwaagen mit Stahlbrücken bedingen einen erheblichen Fertigungsaufwand und sind daher verhältnismäßig teuer.

Nach einem zum Stand der Technik gehörenden Vorschlag, EP-A-0 097 734 (Anmeldetag : 30.06.1982, Veröffentlichungstag : 11.01.1984), kann die Wägebrücke einer Straßenfahrzeugwaage mit speziellen verlorenen Schalungselementen in der Fundamentgrube gegossen werden. Hierzu sind vorgefertigte Schalungselemente erforderlich, die in der Fundamentgrube zusammengesetzt werden und die nach dem Gießen der Wägebrücke am Brückenkörper verbleiben. Die Anschluß- oder Auflagerelemente für die Wägezellen werden in die Brücke mit eingegossen.

Es ist Aufgabe der vorliegenden Erfindung, die Herstellung einer Brückenwaage mit einer Wägebrücke aus Stahlbeton, die in einer Fundamentgrube gegossen wird, zu vereinfachen und zu verbessern. Hierbei soll eine aufwendige Schalung vermieden werden, bzw. es sollen nur einfache Schalungselemente erforderlich sein.

Diese Aufgabe wird durch die in Patentanspruch 1 angegebenen Merkmale gelöst.

Eine weitere Aufgabe der Erfindung besteht darin, eine Wägezelleneinbaueinheit für eine Brückenwaage zu schaffen, die insbesondere bei der Durchführung des beanspruchten Verfahrens verwendbar ist und die eine einfache Montage der Wägezellen ohne besondere Hebezeuge ermöglicht.

Diese Aufgabe wird durch die in Patentanspruch 8 angegebenen Merkmale gelöst.

Die weiteren Ansprüche betreffen Ausgestaltungen der Erfindung.

Vorteile der Erfindung : flache Waagengrube, einfache Herstellung der Wägebrücke, auch in abgelegenen Einsatzorten, keine Ausricht- oder Anpaßarbeiten an der Wägebrücke erforderlich.

Die Erfindung wird nachstehend an einem Ausführungsbeispiel in den Zeichnungen dargestellt und in der Beschreibung näher erläutert. Die Zeichnungen zeigen :

Figur 1 Ausschnitt aus einer Fundamentgrube für eine Wägebrücke mit Teilen einer Wägezelleneinbaueinheit,

Figur 2 Querschnitt durch eine Fundamentgrube für eine Brückenwaage und eine in der Grube gegossene Wägebrücke,

Figur 3 Querschnitt durch eine Wägezelleneinbaueinheit im eingebauten Zustand vor dem Anheben der Wägebrücke,

Figur 4 Querschnitt durch eine Brückenwaage mit Wägezelleneinbaueinheit in Betriebsstellung,

Figur 5 Schnitt durch eine Wägezelleneinbaueinheit mit auf die Wägezelle abgestützter Wägebrücke in Betriebsstellung.

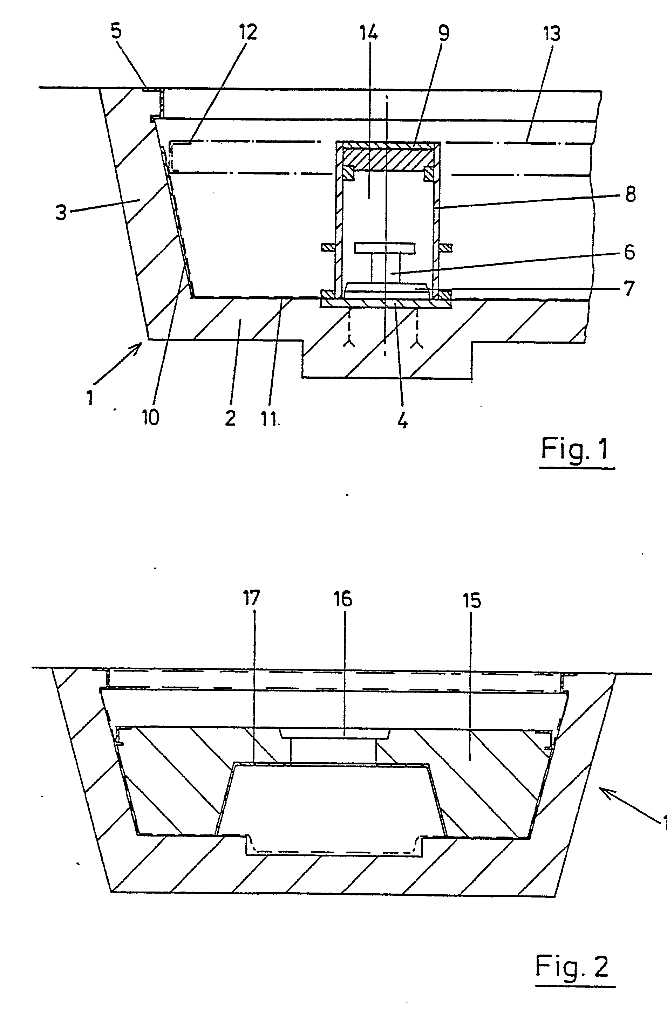

Fig. 1 zeigt einen Teil einer Fundamentgrube 1 für eine in der Figur nicht dargestellte Wägebrücke. Die Grube bildet mit der noch zu beschreibenden Wägebrücke und mit weiteren, nicht dargestellten Anzeige-, Registrier- und Steuereinrichtungen usw. eine Brückenwaage, beispielsweise für Straßenfahrzeuge.

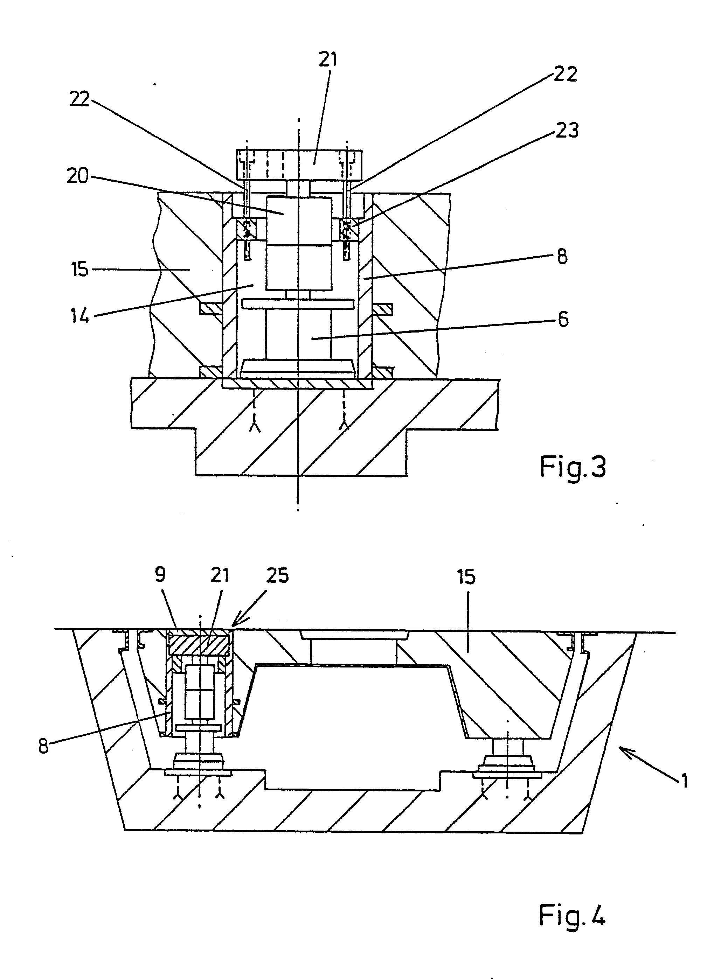

Die Fundamentgrube 1 weist einen Grubenboden 2 und Seiten- bzw. Stirnwände 3 auf. Die Seiten- und Stirnwände der Fundamentgrube 1 gehen nach oben leicht auseinander, d. h. die Grube weist eine sich nach unten, zum Grubenboden 2 hin verjüngende Form auf. Dadurch läßt sich eine in der Fundamentgrube gegossene Wägebrücke nach dem Gießen leicht von der als Schalung dienenden Fundamentgrube lösen. Bei angehobener Wägebrücke (siehe Fig. 4) ergibt sich durch die schrägen Seitenwände das gewünschte Spiel zwischen Fundament und der äußeren seitlichen Kontur der Wägebrücke. Die Grubenwände können auch senkrecht ausgeführt werden, wenn geeignete Schalungselemente für die Seiten der Wägebrücke verwendet werden.

Im Grubenboden 2 werden bei der Herstellung des Fundaments Fundamentplatten 4 für die Aufnahme der Wägezellen einbetoniert, wobei eine Brückenwaage beispielsweise vier Wägezellen bzw. Fundamentplatten aufweisen kann. Weiterhin kann das Grubenfundament eine Grubeneinfassung bzw. einen Einfaßrahmen 5 aufweisen, der ebenfalls bei der Herstellung des Fundaments eingegossen wird. Die Grubeneinfassung kann auch anders als in der Zeichnung dargestellt ausgeführt werden.

Nach dem Aushärten des Fundaments wird auf jeder Fundamentplatte 4 ein Abstützelement 6 für eine Wägezelle beispielsweise durch Schrauben befestigt. Das Abstützelement 6 weist an seinem Fuß eine Zentrierung 7 für ein rohrförmiges Bauteil 8 auf. Nach der Befestigung des Abstützelements 6 wird das rohrförmige Bauteil 8, das beispielsweise ein Stahlbauteil sein kann, auf die Fundamentplatte 4 aufgesetzt, wobei es durch die Zentrierung 7 in seiner Lage fixiert wird. Das rohrförmige Bauteil 8, das in seiner Höhe der Höhe der zu gießenden Wägebrücke entspricht und das zur Bildung einer Durchgangsöffnung 14 in der Wägebrücke dient, wird durch einen Deckel 9 von oben abgedeckt, damit beim Gießen der Wägebrücke kein Vergußmaterial in die Öffnung des rohrförmigen Bauteils gelangen kann.

Nachdem alle Lagerstellen für die Wägebrücke mit den Abstützelementen 6 und den rohrförmigen Bauteilen 8 versehen sind, werden Trennelemente für die Trennung der zu gießenden Wägebrücke vom Grubenboden 2 und den Seitenwänden 3 der Fundamentgrube 1 eingelegt. Hierzu können beispielsweise Schaltafeln 10 oder Trennfolien 11 oder andere geeignete Trennmittel verwendet werden. Zur Formgebung der Unterseite der Wägebrücke können weiterhin Verdrängungskörper eingesetzt werden (siehe Fig. 2 und 4). Die Schalungselemente und die Verdrängungskörper können nach dem Gießen ggf. auch ganz oder teilweise fest mit der Wägebrücke verbunden bleiben. In die Fundamentgrube wird dann noch die Armierung bzw. die tragende Bewehrung der Wägebrücke (nicht dargestellt) sowie der Brückenrahmen 12 eingebracht und in geeigneter Weise fixiert.

Nach den Vorbereitungsarbeiten wird die Wägebrücke in der Fundamentgrube 1 gegossen. Die Oberkante der fertigen Wägebrücke ist in der Zeichnung mit 13 angedeutet. Bei Anwendung des erfindungsgemäßen Verfahrens entspricht die äußere seitliche Form bzw. die seitliche Kontur der Wägebrücke im wesentlichen der inneren Form der Fundamentgrube. Dadurch sind die Anforderungen an die Genauigkeit bei der Herstellung der Fundamentgrube wesentlich geringer als bei vorgefertigten Wägebrücken, da sich die Brücke beim Gießen in der Grube an die Form der Grube anpaßt und sich das erforderliche Spiel zwischen Grube und Wägebrücke in der Betriebslage der Brücke von selbst einstellt.

Fig. 2 zeigt die Fundamentgrube 1 mit der fertig gegossenen Wägebrücke 15 in einem Querschnitt, der nicht durch die Wägezelleneinbaueinheiten verläuft. An der Wägebrücke können, wie in der Zeichnung dargestellt, beispielsweise Einstiegsöffnungen 16 vorgesehen werden. Die Kontur der Unterseite der Wägebrücke kann durch Verdrängungskörper 17, die ggf. auch an der Wägebrücke verbleiben können, festgelegt werden.

Nach dem Abbinden und Aushärten der Wägebrücke können die Wägezellen von oben montiert werden. Hierzu werden zunächst die Deckel 9 der rohrförmigen Bauteile 8 entfernt. Danach wird die Wägezelle 20 von oben durch die von dem rohrförmigen Bauteil 8 gebildete Durchgangsöffnung 14 auf das Abstützelement 6 aufgesetzt und ausgerichtet und mit Hilfe eines Stützflansches 21 und von Zugschrauben 22 fixiert (Fig. 3). Die Wägezelle 20 stützt sich nach oben gegen den Stützflansch 21 ab, der mit den Zugschrauben 22 gegen einen Ringflansch 23 angezogen werden kann. Die Zugschrauben 22 können im Stützflansch 21 versenkt angeordnet werden. Die Zugschrauben 22 haben eine doppelte Funktion: sie dienen zum Hochziehen der Wägebrücke und als Befestigungsschrauben im montierten Zustand.

Nachdem alle Wägezellen 20 an der Brückenwaage in der angegebenen Weise eingesetzt sind, wird die Wägebrücke 15 durch gleichmäßiges Anziehen der Zugschrauben 22 an den einzelnen Auflagerpunkten bzw. Wägezellen langsam angehoben. Das Anheben ist beendet und die Wägebrücke 15 befindet sich in Betriebsstellung, wenn die Stützflansche 21 an den Ringflanschen 23 anliegen. In Fig. 4 ist dieser Zustand dargestellt. Das rohrförmige Bauteil 8 kann durch den Deckel 9, der auf dem Stützflansch 21 in geeigneter Weise, z. B. durch Schrauben befestigt ist, bündig mit der Oberfläche der Wägebrücke 15 angeschlossen werden.

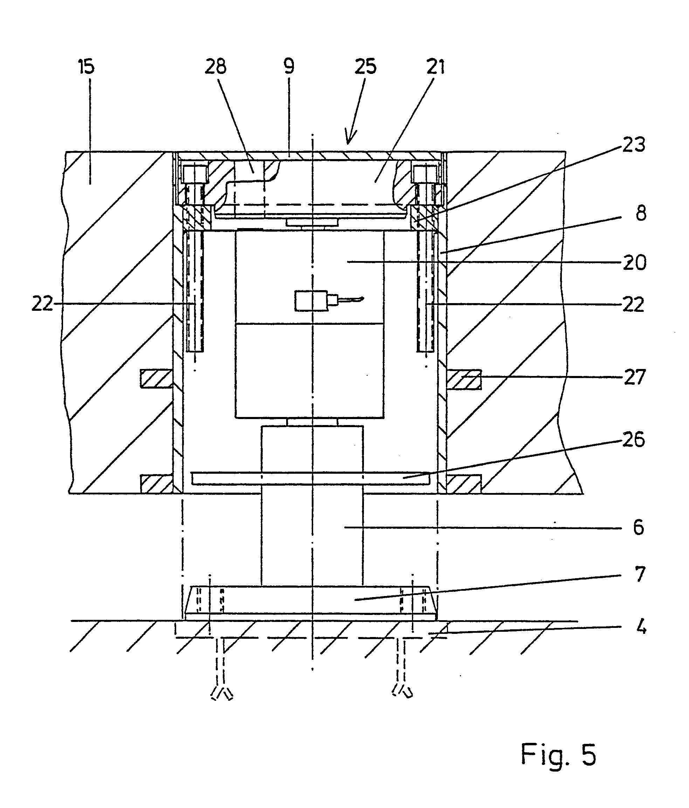

In Fig. 5 ist eine Wägezelleneinbaueinheit 25 mit weiteren Einzelheiten dargestellt. Die Einheit besteht aus dem Abstützelement 6 für die Wägezelle, das auf der Fundamentplatte 4 befestigt ist, der Wägezelle 20, dem rohrförmigen Bauteil 8, dem Stützflansch 21 mit den Schrauben 22 und dem Deckel 9.

Am Fuß des Abstützelements 6 ist die Zentrierung 7 für das rohrförmige Bauteil 8 angeordnet. Weiterhin weist das Abstützelement 6 eine Stoßfängeranordnung auf, die z. B. in Form eines ringförmigen Flansches 26 ausgeführt sein kann. Der Flansch kann auch elastisch ausgebildet sein oder elastische Teile aufweisen. Die mit dem ringförmigen Bauteil 8 zusammenwirkende Stoßfängeranordnung bildet einen einfachen und allseitig wirkenden Schutz der Wägezelle gegenüber Überlastung durch Querkräfte.

Das rohrförmige Bauteil 8 weist an seiner Außenseite Elemente 27 zu seiner Verankerung in der Wägebrücke auf. Die Elemente können, wie dargestellt, z. B. als Außenrippen ausgebildet sein oder eine andere geeignete Form besitzen. Die Verankerungselemente können auch an der Armierung der Wägebrücke 15 befestigt werden.

Auf der Innenseite des rohrförmigen Bauteils 8 ist der mit dem Bauteil verbundene Ringflansch 23 erkennbar, der über seinem Umfang eine geeignete Anzahl von Gewindelöchern für die Aufnahme der Zugschrauben 22 aufweist. Über den Ringflansch 23, die Zugschrauben 22 und den Stützflansch 21 wird das Eigengewicht der Wägebrücke und die Betriebslast auf die Wägezelle 20 übertragen.

Der Stützflansch 21 weist mindestens eine Durchgangsöffnung 28 auf, durch die z. B. das Typenschild der eingebauten Wägezelle eingesehen und kontrolliert werden kann.

Die Wägezelleneinbaueinheit 25 stellt eine kompakte Einheit dar, die sowohl am Einsatzort als auch bei Wägebrücken in Fertigbauweise eingesetzt werden kann. Die Einheit übernimmt auch die Stoßfängerfunktion, für die bei den bisher bekannten Anordnungen besondere Bauteile erforderlich waren. Die Einbaueinheit dient nicht nur zum Abstützen der Wägezelle, sondern auch zum Anheben der Wägebrücke nach dem Gießen, so daß besondere Hebezeuge am Einbauort bei Verwendung der Einbaueinheit nicht nötig sind.

**Patentansprüche**

1. Verfahren zur Herstellung einer auf Wägezellen (20) abgestützten und eine Wägebrücke (15) aufweisenden Brückenwaage mit folgenden Verfahrensschritten :
Erstellen der Fundamentgrube (1) für die Waage, wobei die Fundamentgrube (1) als Schalung für die Wägebrücke (15) vorgesehen wird,
Einlegen von Trennmitteln (10, 11) in die ausgehärtete Fundamentgrube (1), die zum Trennen der Wägebrücke (15) von der Fundamentgrube (1) dienen,
Gießen der Wägebrücke (15) in Stahlbetonausführung in der mit Trennmitteln (10, 11) ausgelegten Fundamentgrube (1), wobei Anschlußelemente für die Wägezellen (20) in die Wägebrücke (15) eingegossen werden,
Anheben der ausgehärteten Wägebrücke (15) und Abstützen der Wägebrücke (15) auf die Wägezellen (20).

2. Verfahren nach Anspruch 1, wobei die Wägebrücke (15) bei ihrer Herstellung durch Schaltafeln, Platten oder ähnliche Schalelemente (10) oder durch Trennfolien (11) von der Fundamentgrube (1) getrennt wird.

3. Verfahren nach Anspruch 1 oder 2, wobei in der Wägebrücke (15) Durchgangsöffnungen (14) vorgesehen werden, wobei die Wägezellen (20) nach Herstellung und Aushärtung der Wägebrücke (15) von oben durch die Durchgangsöffnungen (14) auf Abstützelemente (6) im Grubenboden (2) aufgesetzt werden und wobei die Wägebrücke (15) danach angehoben wird und an den Anschlußelementen auf die Wägezellen (20) abgestützt wird.

4. Verfahren nach Anspruch 3, wobei die Durchgangsöffnungen (14) mit Hilfe von rohrförmigen Bauteilen (8) hergestellt werden, die etwa die gleiche Höhe wie die Wägebrücke (15) aufweisen und die bei der Herstellung der Brücke in diese einbetoniert werden.

5. Verfahren nach Anspruch 4, wobei die Abstützelemente (6) für die Wägezellen (20) vor der Herstellung der Wägebrücke (15) auf im Grubenboden (2) eingegossenen Fundamentplatten (4) befestigt werden und wobei die rohrförmigen Bauteile (8) auf die Fundamentplatten (4) aufgesetzt werden und hierbei die Abstützelemente (6) für die Wägezellen (20) umschließen, wobei sie durch Zentrierungen (7) an den Abstützelementen (6) in ihrer Lage fixiert werden.

6. Verfahren nach Anspruch 1, wobei Fundamentplatten (4) für Abstützelemente (6) der Wägezellen (20) und eine Grubeneinfassung (5) bei der Herstellung der Fundamentgrube (1) eingegossen werden.

7. Verfahren nach einem der vorhergehenden Ansprüche, wobei die Wägebrücke (15) in einer Fundamentgrube (1) gegossen wird, die eine sich zum Grubenboden (2) hin leicht verjüngende Form aufweist und die tiefer ist als die Höhe der Wägebrücke (15) und wobei die Wägebrücke (15) auf dem Grubenboden (2) aufliegend gegossen wird.

8. Wägezelleneinbaueinheit (25) für eine Brückenwaage mit einer Wägebrücke (15) aus Stahlbeton, insbesondere zur Verwendung bei der Durchführung des Verfahrens nach einem der vorhergehenden Ansprüche, mit einer Wägezelle (20) und einem Abstützelement (6) für die Wägezelle, das mit einer Fundamentplatte (4) verbindbar ist, dadurch gekennzeichnet, daß die Einheit (25) ein mit der Wägebrücke (15) verbindbares, die Wägezelle (20) und das Abstützelement (6) in sich aufnehmendes rohrförmiges Bauteil (8) aufweist und daß das rohrförmige Bauteil (8) an seinem oberen, der Oberfläche der Wägebrücke (15) zugewandten Ende Elemnte (21 bis 23) aufweist, über die es im eingebauten Zustand zusammen mit der Wägebrücke (15) auf die Wägezelle (20) abstützbar ist.

9. Wägezelleneinbaueinheit nach Anspruch 8, dadurch gekennzeichnet, daß das Abstützelement (6) für die Wägezelle (20) eine Zentrierung (7) für das rohrförmige Bauteil (8) sowie eine mit dem rohrförmigen Bauteil (8) im Betriebszustand der Wägebrücke (15) zusammenwirkende Stoßfängeranordnung (26) aufweist.

10. Wägezelleneinbaueinheit nach Anspruch 8, dadurch gekennzeichnet, daß das rohrförmige Bauteil (8) auf seiner Innenseite einen mit Abstand von seinem oberen Ende angeordneten Ringflansch (23) mit Gewindelöchern aufweist und daß ein Stützflansch (21) vorgesehen ist, der auf die Wägezelle (20) abstützbar und gegen den Ringflansch (23) anziehbar ist.

11. Wägezelleneinbaueinheit nach Anspruch 8, dadurch gekennzeichnet, daß das rohrförmige Bauteil (8) Elemente (27) zu seiner Verankerung in der Wägebrücke (15) aufweist.

12. Wägezelleneinbaueinheit nach Anspruch 10, dadurch gekennzeichnet, daß der Stützflansch (21) eine Durchgangsöffnung (28) zur Sichtkontrolle des Wägezellen-Typenschildes aufweist.

**Claims**

1. Process for the manufacture of a platform balance, supported on load cells (20) and having a weigh bridge (15), with the following process steps :
construction of the foundation cavity (1) for the weighing mechanism, whereby the foundation cavity (1) is provided as a casing for the weigh bridge (15),
insertion of separation means (10, 11) into the hardened foundation cavity (1), which serve to separate the weigh bridge (15) from the foundation cavity (1),

casting of the weigh bridge (15) in reinforced concrete construction in the foundation cavity (1) which is laid out with separation means (10, 11), connection elements for the load cells (20) being cast into the weigh bridge (15),

lifting the hardened weigh bridge (15) and supporting the weigh bridge (15) on the load cells (20).

2. Process according to Claim 1, wherein the weigh bridge (15) is separated from the foundation cavity (1) in its manufacture by shell panels, plates or similar shell elements (10) or by separating sheeting (11).

3. Process according to Claim 1 or 2, wherein passage openings (14) are provided in the weigh bridge (15), wherein after manufacture and hardening of the weigh bridge (15) the load cells (20) are placed from above through the passage openings (14) on support elements (6) in the cavity base (2), and wherein the weigh bridge (15) is thereafter lifted and supported on the connection elements onto the load cells (20).

4. Process according to Claim 3, wherein the passage openings (14) are produced with the aid of tubular components (8), which have approximately the same height as the weigh bridge (15) and which during manufacture of the bridge are concreted into the latter.

5. Process according to Claim 4, wherein before the manufacture of the weigh bridge (15) the support elements (6) for the load cells (20) are attached on foundation plates (4) which are cast in the cavity base (2) and wherein the tubular components (8) are placed on the foundation plates (4) and thereby surround the support elements (6) for the load cells (20), being fixed in their position through centerings (7) on the support elements (6).

6. Process according to Claim 1, wherein foundation plates (4) for support elements (6) of the load cells (20) and cavity rim (5) are cast in with the production of the foundation cavity (1).

7. Process according to one of the preceding claims, wherein the weigh bridge (15) in cast in a foundation cavity (1), which has a shape tapering slightly towards the cavity base (2) and which is deeper than the height of the weigh bridge (15) and wherein the weigh bridge (15) is cast resting on the cavity base (2).

8. Load cell assembly unit (25) for a platform balance with a weigh bridge (15) of reinforced concrete, in particular for use in carrying out the process according to one of the preceding claims, with a load cell (20) and a support element (6) for the load cell, which element can be connected with a foundation plate (4), characterised in that the unit (25) has a tubular component (8) which can be connected with the weigh bridge (15) and carries in it the load cell (20) and the support element (6), and that the tubular component (8) has elements (21 to 23) on its upper end facing the surface of the weigh bridge (15) *via* which it can be supported on the load cell (20) together with the weigh bridge (15) in installed state.

9. Load cell assembly unit according to Claim 8, characterised in that the support element (6) for the load cell (20) has a centering (7) for the tubular component (8) and also a shock absorber arrangement (26) which co-operates with the tubular component (8) in the operating state of the weigh bridge (15).

10. Load cell assembly unit according to Claim 8, characterised in that on its inner side the tubular component (8) has an annular flange (23) with threaded holes, which is arranged at a distance from its upper end, and that a supporting flange (21) is provided which can be supported on the load cell (20) and can be tightened against the annular flange (23).

11. Load cell assembly unit according to Claim 8, characterised in that the tubular component (8) has elements (27) for its anchoring in the weigh bridge (15).

12. Load cell assembly unit according to Claim 10, characterised in that the supporting flange (21) has a through opening (28) for the visual inspection of the load cell identification plate.

**Revendications**

1. Procédé de fabrication d'un pont-bascule s'appuyant sur des capteurs de pesée (20) et comportant un pont de pesée (15), caractérisé en ce qu'il comprend les étapes opératoires suivantes :

on réalise la fosse de fondation (1) pour le pont-bascule, la fosse de fondation (1) étant prévue sous la forme d'un coffrage pour le pont de pesée (15),

on dépose des moyens de séparation (10, 11) dans la fosse de fondation (1) durcie servant à séparer le pont de pesée (15) de la fosse de fondation (1),

on coule le pont de pesée (15) dans une réalisation en béton armé dans la fosse de fondation (1) pourvue des moyens de séparation (10, 11), en incorporant les éléments de raccordement pour les capteurs de pesée (20) dans le pont de pesée (15),

on soulève le pont de pesée (15) durci et on appuie le pont de pesée (15) sur les capteurs de pesée (20).

2. Procédé selon la revendication 1, caractérisé en ce qu'on sépare le pont de pesée (15) de la fosse de fondation (1) lors de sa fabrication, par des panneaux de coffrage, des plaques ou des éléments de coffrage (10) analogues ou par des pellicules de séparation (11).

3. Procédé selon la revendication 1 ou 2, caractérisé en ce qu'on prévoit dans le pont de pesée (15) des ouvertures de passage (14), on pose les capteurs de pesée (20), après la fabrication et le durcissement du pont de pesée (15), par en haut, à travers les ouvertures de passage (14), sur des éléments d'appui (6) dans le fond (2) de la fosse de fondation, et en ce qu'on soulève ensuite le pont de pesée (15) et on l'appuie sur les capteurs de pesée (20) au contact des éléments de raccordement.

4. Procédé selon la revendication 3, caractérisé en ce qu'on forme les ouvertures de passage (14) à l'aide de composants tubulaires (8) qui présentent à peu près la même hauteur que le pont de pesée (15) et qui sont pris dans le béton du pont lors de sa fabrication.

5. Procédé selon la revendication 4, caractérisé en ce qu'on fixe les éléments d'appui (6) pour les capteurs de pesée (20), avant la fabrication du pont de pesée (15), sur des plaques de fondation (4) coulées dans le fond (2) de la fosse de fondation, et en ce qu'on pose les composants tubulaires (8) sur les plaques de fondation (4) et l'on entoure ainsi les éléments d'appui (6) pour les capteurs de pesée (20), en les fixant dans leur position par des éléments de centrage (7) aux éléments d'appui (6).

6. Procédé selon la revendication 1, caractérisé en ce qu'on coule des plaques de fondation (4) pour des éléments d'appui (6) des capteurs de pesée (20) et un rebord de fosse (5), lors de la production de la fosse de fondation (1).

7. Procédé selon l'une des revendications précédentes, caractérisé en ce qu'on coule le pont de pesée (15) dans une fosse de fondation (1) qui présente une forme s'amincissant légèrement vers le fond (2) de la fosse de fondation et qui a une profondeur supérieure à la hauteur du pont de pesée (15), et en ce qu'on coule le pont de pesée (15), posé sur le fond de la fosse (2).

8. Module à capteur de pesée (25) pour un pont-bascule comportant un pont de pesée (15) en béton armé, à utiliser en particulier lorsqu'on met en œuvre le procédé selon l'une des revendications précédentes, comportant un capteur de pesée (20) et un élément d'appui (6) pour le capteur de pesée que l'on peut relier à une plaque de fondation (4), caractérisé en ce que le composant (25) comporte un élément tubulaire (8) pouvant être relié au pont de pesée (15) recevant en son intérieur le capteur de pesée (20) et l'élément d'appui (6), et en ce que le composant tubulaire (8) comporte à son extrémité supérieure située du côté de la surface du pont de pesée (15) des éléments (21 à 23) par l'intermédiaire desquels il peut s'appuyer, à l'état monté, en même temps que le pont de pesée (15), sur le capteur de pesée (20).

9. Module selon la revendication 8, caractérisé en ce que l'élément d'appui (6) pour le capteur de pesée (20) comporte un élément de centrage (7) pour le composant tubulaire (8), ainsi qu'un ensemble pare-chocs (26) coopérant avec le composant tubulaire (8) dans l'état de fonctionnement du pont de pesée (15).

10. Module selon la revendication 8, caractérisé en ce que le composant tubulaire (8) comporte, sur sa face intérieure, une bride annulaire (23) comportant des trous taraudés, placée à distance de son extrémité supérieure, et en ce qu'il est prévu une bride d'appui (21) pouvant s'appuyer sur le capteur de pesée (20 et être serrée contre la bride annulaire (23).

11. Module selon la revendication 8, caractérisé en ce que le composant tubulaire (8) comporte des éléments (27) pour l'ancrer dans le pont de pesée (15).

12. Module selon la revendication 10, caractérisé en ce que la bride d'appui (21) comporte une ouverture de passage (28) pour le contrôle visuel de la plaque caractéristique du capteur de pesée.

Fig. 1

Fig. 2

0 108 164

Fig.3

Fig.4

2

Fig. 5